Europäisches Patentamt

**European Patent Office**

Office européen des brevets

(11) Numéro de publication: **0 239 456 B1**

(12)

# FASCICULE DE BREVET EUROPEEN

(45) Date de publication de fascicule du brevet:
20.03.91

(51) Int. Cl.⁵: **H01R 25/16**

(21) Numéro de dépôt: 87400506.9

(22) Date de dépôt: 09.03.87

(54) Support adaptateur pour appareillage électrique.

(30) Priorité: 10.03.86 FR 8603334

(43) Date de publication de la demande:
30.09.87 Bulletin 87/40

(45) Mention de la délivrance du brevet:
20.03.91 Bulletin 91/12

(84) Etats contractants désignés:
**AT BE DE ES FR GB GR IT NL**

(56) Documents cités:
EP-A- 0 159 554
FR-A- 1 367 235
FR-A- 1 552 492
FR-A- 2 157 956
GB-A- 2 137 025

(73) Titulaire: **LEGRAND**
**128 Avenue du Maréchal de Lattre de Tassigny**
**F-87045 Limoges Cédex(FR)**

(72) Inventeur: **Marcou, Jean-Claude**

**F-72140 Rouesse Vasse(FR)**
Inventeur: **Buard, Yvon**
**Voutre**
**F-53600 Evron(FR)**

(74) Mandataire: **CABINET BONNET-THIRION**
**95 Boulevard Beaumarchais**
**F-75003 Paris(FR)**

## Description

La présente invention concerne d'une manière générale les supports pour appareillages électriques, et elle vise plus particulièrement ceux de ces supports, dits supports adaptateurs, couramment mis en oeuvre pour faciliter l'implantation de tels appareillages électriques au voisinage immédiat des conduits, tels que moulures, plinthes ou analogues, dans lesquels courent, en y étant protégés, les conducteurs électriques nécessaires à leur desserte.

Globalement, un tel support adaptateur comporte un corps, qui est propre au logement du mécanisme de l'appareillage électrique concerné, qu'il s'agisse par exemple d'un interrupteur, ou qu'il s'agisse d'une prise de courant ou d'un quelconque autre appareillage électrique, et qui comporte lui-même une semelle, et, bordant celle-ci sur une partie au moins de sa périphérie, et sur une hauteur suffisante compte tenu du mécanisme concerné, un cadre.

Il est bien entendu souhaitable qu'il n'y ait pas de césure dans la protection des conducteurs électriques nécessaires à la desserte d'un tel appareillage électrique, ou, autrement dit, qu'il y ait, au contraire, une certaine continuité dans cette protection.

C'est au support adaptateur mis en oeuvre qu'il revient d'assurer cette continuité de protection.

Le problème, en l'espèce, est double : d'une part, un appareillage électrique peut être implanté soit latéralement par rapport au conduit qui le dessert, soit en bout de celui-ci ; et, d'autre part, les dimensions de ce conduit peuvent varier, et notamment sa largeur, suivant le nombre de conducteurs électriques qu'il est appelé à contenir.

Lorsqu'un appareillage électrique est implanté latéralement par rapport au conduit qui le dessert, ce qui est en pratique le cas le plus fréquent, il a déjà été proposé de mettre en oeuvre, pour la continuité de protection à assurer pour les conducteurs électriques correspondants, un support adaptateur dont le cadre comporte un prolongement en forme d'auvent apte à coiffer un tel conduit, en s'étendant transversalement par dessus celui-ci et en se substituant localement à son couvercle, ce qui permet d'éliminer localement ce couvercle sur une longueur suffisante pour une sortie latérale des conducteurs électriques.

A ce jour, un tel auvent fait le plus souvent corps avec le cadre qu'il prolonge, l'ensemble appartenant, suivant une disposition monobloc, à une seule et même pièce. C'est le cas par exemple dans le brevet français FR-A- 2.488.064.

Bien qu'une telle disposition puisse donner satisfaction, au moins dans certaines applications, elle présente l'inconvénient évident de nécessiter autant de supports adaptateurs qu'il y a de largeurs possibles pour les conduits susceptibles d'être mis en oeuvre.

Il est clair, en outre, qu'un support adaptateur ainsi doté rigidement d'un auvent ne peut convenir au cas d'une implantation d'un appareillage électrique en bout d'un tel conduit.

Dans le brevet français FR-A- 1.552.492, il a cependant été proposé de dissocier l'auvent du corps, en prévoyant entre ces éléments des moyens d'engagement.

En pratique, ces moyens d'engagement comportent alors une rainure unique prévue à l'extrémité concernée de l'auvent, tout au long du débouché de celui-ci, pour coopération en emboîtement avec un rebord prévu de manière complémentaire sur un évidement du cadre du corps.

Il en est sensiblement de même dans la demande de brevet français FR-A- 2.157.956, dans laquelle cependant la rainure est prévue sur le corps, qui forme en l'espèce un couvercle, aussi bien que dans la demande de brevet anglais GB-A- 2.137.025, dans laquelle, cependant, s'ils reconstituent globalement une rainure unique, les moyens d'engagement correspondants sont des sortes de crochets.

Outre la difficulté qu'il peut y avoir à assurer l'emboîtement d'un rebord dans une rainure, ces dispositions ont en commun de ne permettre l'implantation de l'auvent par rapport au corps que suivant une configuration bien déterminée, figée une fois pour toutes, et reconstituant en quelque sorte celle correspondant à une disposition monobloc.

Il résulte de ce qui précède que, à ce jour, il est nécessaire de disposer de manière dispendieuse d'un nombre élevé de supports adaptateurs différents chacun adaptés à une largeur de conduit déterminée et/ou à un mode d'implantation déterminé par rapport à un tel conduit.

La présente invention a d'une manière générale pour objet une disposition permettant au contraire de minimiser le nombre de support adaptateurs ainsi nécessaires.

D'une manière plus générale elle a pour objet un support adaptateur pour appareillage électrique, du genre comportant, d'une part, un corps, qui est propre au logement du mécanisme d'un tel appareillage électrique, et qui comporte lui-même une semelle, et, bordant celle-ci, un cadre dont l'un au moins des côtés, dit ci-après par simple commodité côté ajouré, est au moins en partie évidé, avec en bordure de 1'évidement correspondant, des moyens d'engagement, et, d'autre part, associé audit corps, un auvent qui forme une pièce distincte dudit cadre, et qui est doté de moyens d'engagement par lesquels il est apte à venir en prise avec les moyens d'engagement précédents, ledit auvent présentant au moins une aile, dite ci-après par simple commodité aile de recouvrement, par laquelle il est propre à recouvrir localement un conduit, tel que moulure, plinthe ou analogue, caractérisé en ce que les moyens d'engagement de l'auvent comportent une pluralité de languettes qui sont échelonnées transversalement par rapport à son aile de recouvrement et par chacune desquelles il est apte à se crocheter sur une languette, qui, solidaire du corps auquel il est associé, en s'étendant sensiblement perpendiculairement à la semelle de celui-ci, appartient aux moyens d'engagement que comporte ce dernier, en sorte que ledit auvent est réglable en position par rapport audit corps, suivant l'une ou l'autre de plusieurs positions prédéterminées.

Autrement dit, l'auvent à mettre en oeuvre lorsqu'un appareillage électrique doit être implanté latéralement par rapport au conduit qui le dessert peut, avantageusement suivant l'invention, être réglé en position, à la manière d'un tiroir, par rapport au cadre du support adaptateur qu'il équipe, en étant plus ou moins engagé profondément dans l'évidement du côté ajouré de ce cadre, et il peut donc être ajusté à volonté à la largeur du conduit concerné.

Bien entendu, les positions ainsi prévues pour l'auvent sont établies en fonction des largeurs les plus usuelles pour les conduits susceptibles d'être concernés.

Corollairement, suivant un développement de l'invention, lorsque l'implantation d'un appareillage électrique doit se faire en bout d'un tel conduit, il suffit d'éliminer un tel auvent et de lui substituer un flasque de fermeture, ce flasque de fermeture étant, suivant l'invention, choisi apte à occulter, sur une partie au moins de sa hauteur, l'évidement du côté ajouré du cadre du corps du support adaptateur concerné.

Lorsque, par exemple, ce flasque de fermeture est apte à occulter cet évidement sur la totalité de sa hauteur, il y est prévu, suivant l'invention, au moins une ligne de prédécoupe, et, en pratique, une pluralité de telles lignes disposées concentriquement les unes par rapport aux autres, propres chacune à permettre d'en détacher un panneau de dimensions déterminées.

Il suffit, suivant la largeur et/ou la hauteur du conduit concerné, de détacher d'un tel flasque de fermeture le panneau de dimensions correspondantes.

Ainsi, le support adaptateur suivant l'invention, qui peut connaître des formes de réalisation très diverses, les unes suivant lesquelles le cadre de son corps forme une pièce distincte de la semelle de celui-ci, les autres suivant lesquelles au contraire ce cadre est d'un seul tenant avec cette semelle, peut avantageusement convenir, avec une grande souplesse, à un grand nombre d'applications différentes, ce qui réduit d'autant le nombre de supports adaptateurs différents à prévoir pour satisfaire à l'ensemble des applications envisageables.

Les caractéristiques et avantages de l'invention ressortiront d'ailleurs de la description qui va suivre, à titre d'exemple, en référence aux dessins schématiques annexés sur lesquels :

la figure 1 est une vue en perspective d'un support adaptateur suivant l'invention représenté en place au côté d'un conduit ;

la figure 2 est, à échelle supérieure, et avec des arrachements locaux, une vue en perspective éclatée de ce support adaptateur et de ce conduit ;

la figure 3 est, à échelle encore supérieure, une vue partielle en coupe transversale du support adaptateur suivant l'invention, suivant la ligne III-III de la figure 1 ;

la figure 4 est une vue analogue à celle de la figure 3, pour un conduit de largeur inférieure à celle du conduit précédent ;

la figure 5 est une vue en perspective éclatée analogue à celle de la figure 2, pour une variante de réalisation du support adaptateur suivant l'invention ;

la figure 6 est, suivant la flèche VI de la figure 5, et avec un arrachement local, une vue partielle en élévation du corps du support adaptateur suivant l'invention dans cette variante ;

la figure 7 est une vue partielle en plan de ce corps, suivant la flèche VII de la figure 6 ;

la figure 8 est une vue en coupe transversale de l'auvent correspondant, suivant la ligne VIII-VIII de la figure 5 ;

la figure 9 reprend, à échelle supérieure, le détail de la figure 8 repéré par un encart IX sur celle-ci ;

la figure 10 est une vue partielle en élévation de l'auvent concerné, suivant la flèche X de la figure 8;

la figure 11 est une vue partielle en plan-coupe de cet auvent, suivant la ligne XI-XI de la figure 10 ;

la figure 12 est, suivant la ligne XII-XII de la figure 5, une vue en coupe longitudinale d'un flasque de fermeture susceptible d'être substitué à un tel auvent ;

la figure 13 est une vue en plan de ce flasque de fermeture, suivant la flèche XIII de la figure 12 ;

la figure 14 est, pour une variante de mise en oeuvre, une vue en perspective éclatée analogue à celle de la figure 5 ;

la figure 15 est une vue en perspective d'un embout avantageusement associé à l'auvent pour cette variante de mise en oeuvre ;

la figure 16 est une vue en perspective éclatée de cet auvent, représenté couché, et de cet embout, et illustrant la mise en oeuvre de ce dernier.

Tel qu'illustré sur ces figures, il s'agit, d'une manière générale, de la desserte d'un quelconque appareillage électrique 10 à implanter sur une quelconque base 11, un mur par exemple, sur laquelle court également un quelconque conduit 12, une moulure par exemple, servant de logement aux conducteurs électriques nécessaires à cette desserte et assurant ainsi la protection de ces derniers.

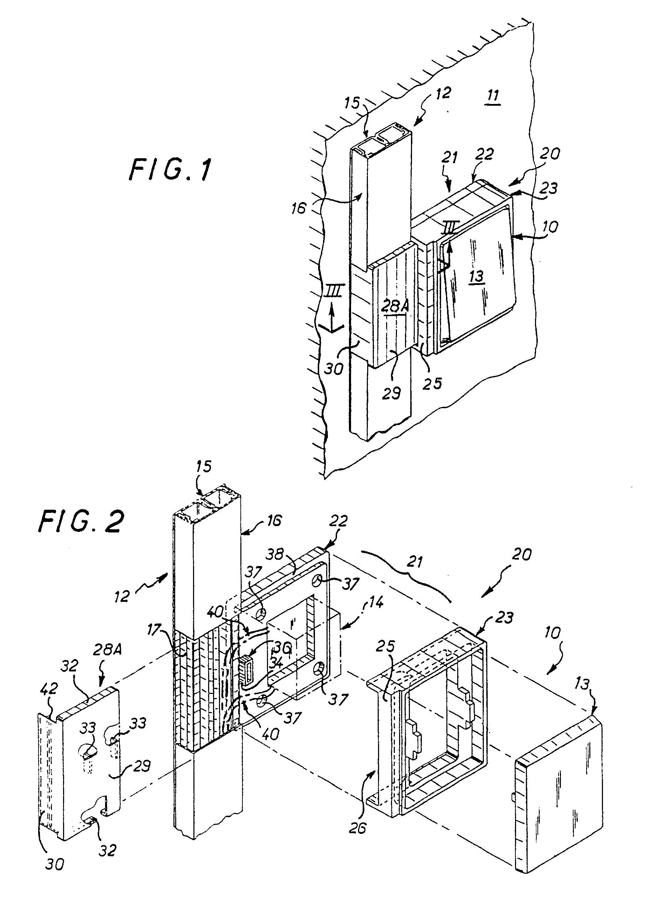

Dans la forme de mise en oeuvre illustrée par les figures 1 à 4, l'appareillage électrique 10 concerné est plus particulièrement, à titre d'exemple, un interrupteur.

En pratique, seule est représentée, en trait plein, sur l'ensemble de ces figures, la touche de commande basculante 13 d'un tel interrupteur, son mécanisme 14 n'apparaissant, lui, que sur la seule figure 2, en n'y étant en outre que schématisé, en traits interrompus, par son seul contour.

Un tel interrupteur ne faisant pas par lui-même l'objet de la présente invention, il ne sera pas décrit plus en détail ici.

Il en est de même en ce qui concerne le conduit 12.

Il suffira d'indiquer que, de manière usuelle, ce conduit 12 comporte un corps 15, et, encliqueté sur celui-ci, un couvercle 16.

Dans la forme de réalisation représentée, les ailes latérales du couvercle 16 courent sur toute la hauteur du corps 15, en s'étendant jusqu'à la semelle de celui-ci.

Quoi qu'il en soit, pour l'encliquetage de ce couvercle 16, les ailes latérales que présente lui-même le corps 15 forment chacune, longitudinalement, en retrait, un redan 17.

De manière connue en soi, il est mis en oeuvre, pour l'implantation de l'appareillage électrique 10 sur la base 11 à équiper, ce qu'il est convenu d'appeler un support adaptateur 20.

De manière également connue en soi, ce support adaptateur 20 comporte, globalement, un corps 21, qui est propre au logement du mécanisme 14 de l'appareillage électrique 10 concerné, et qui comporte lui-même une semelle 22, et, bordant celle-ci, sur une partie au moins de sa périphérie, un cadre 23.

En pratique, le corps 21 a, globalement, un contour quadrangulaire, à angles éventuellement arrondis.

Son cadre 23, aussi bien que sa semelle 22, comportent donc quatre côtés.

L'un au moins des côtés du cadre 23 que représente ainsi le corps 21, dit ci-après par simple commodité côté ajouré 25, est au moins en partie évidé, avec, pour le corps 21, en bordure de l'évidement 26 correspondant, des moyens d'engagement, et, à un tel corps 21, il est associé un organe d'équipement 28, qui forme une pièce distincte dudit cadre 23, et qui est doté de moyens d'engagement par lesquels il est apte à venir en prise avec les moyens d'engagement précédents, c'est-à-dire avec ceux dont est lui-même doté ledit corps 21.

L'implantation de l'appareillage électrique 10 devant se faire latéralement par rapport au conduit 12 dans la forme de mise en oeuvre illustrée sur les figures 1 à 4, et le support adaptateur 20 étant donc destiné à être accolé à un tel conduit 12, l'organe d'équipement 28 qui est associé à son corps 21 est, en fait, un auvent 28A propre à coiffer ce conduit 12.

Globalement, dans les formes de réalisation représentées, cet auvent 28A comporte, sensiblement en équerre l'une par rapport à l'autre, deux ailes, à savoir une aile supérieure de recouvrement 29, par laquelle il est apte à recouvrir localement le conduit 12, en étant engagé par son extrémité dans l'évidement 26 du côté ajouré 25 du cadre 23 du corps 21, et une aile latérale d'appui 30, par laquelle il est apte à se plaquer contre le flanc dudit conduit 12 opposé audit corps 21.

Dans les formes de réalisation représentées, l'aile de recouvrement 29, qui, comme l'aile d'appui 30 a, globalement, un contour quadrangulaire, avec, quant à elle, des angles légèrement arrondis, déborde légèrement, latéralement, et de part et d'autre, de cette aile d'appui 30, et, sur chacun de ses deux côtés latéraux à compter de cette dernière, elle est bordée par un bord tombé 32, qui lui est sensiblement perpendiculaire, en s'étendant dans le même sens que ladite aile d'appui 30.

Suivant l'invention, les moyens d'engagement que comporte l'auvent 28A ainsi constitué comportent une pluralité de languettes 33, qui sont échelonnées transversalement par rapport à son aile de recouvrement 29, et donc sensiblement parallèlement à son aile d'appui 30, et par chacune desquelles il est apte à se crocheter sur une languette 34, qui, solidaire du corps 21 auquel il est associé, en s'étendant sensiblement perpendiculairement à la semelle 22 de celui-ci, appartient aux moyens d'engagement que comporte ce corps 21, en sorte que l'auvent 28A est réglable en position par rapport au corps 21 suivant l'une ou l'autre de plusieurs positions déterminées.

En pratique, dans la forme de réalisation représentée sur les figures 1 à 4, les languettes 33 appartenant ainsi aux moyens d'engagement de l'auvent 28A sont au nombre de deux, et elles sont portées par l'aile de recouvrement 29 de cet auvent 28A, en faisant saillie sur la surface inférieure, ou interne, de cette aile de recouvrement 29, dans le même sens que ses bords tombés 32.

Dans la forme de réalisation représentée, elles s'étendent dans la zone médiane de l'aile de recouvrement 29, sensiblement à niveau avec ses bords tombés 32, à distance de ceux-ci, et, établies parallèlement l'une à l'autre, elles sont à distance l'une de l'autre.

Conjointement, dans cette forme de réalisation, la languette 34 appartenant aux moyens d'engagement que comporte conjointement le corps 21 du support adaptateur 20 forme l'un des côtés d'un puits 36 qui fait saillie sur la semelle 22 de ce corps 21.

En pratique, ce puits 36 s'étend en bordure d'un des côtés de la semelle 22, celui par lequel elle doit être accolée au conduit 12, dans la zone médiane de ce côté.

En pratique, également, le cadre 23 du corps 21 forme une pièce distincte de la semelle 22 de celui-ci dans cette forme de réalisation.

L'évidement 26 du côté ajouré 25 de ce cadre 23 est alors ouvert latéralement en direction de la semelle 22.

Ses dimensions, en largeur et hauteur, sont choisies suffisantes pour que le cadre 23 puisse coiffer l'aile de recouvrement 29 de l'auvent 28A, lorsque cet auvent 28A coiffe lui-même le conduit 12.

Bien entendu, des moyens de fixation, non représentés, sont prévus pour assujettir la semelle 22 à la base 11 à équiper.

Il peut s'agir par exemple de vis, des perçages 37 étant prévus, pour leur passage, aux quatre angles de cette semelle 22.

De même, des moyens sont prévus pour assujettir le cadre 23 à la semelle 22.

Par exemple, il peut être procédé par vissage ou encliquetage.

Ces dispositions relevant de l'homme de l'art, elles ne seront pas décrites plus en détail ici.

Il sera simplement indiqué que, dans la forme de réalisation représentée, la semelle 22 forme, en retrait sur ses trois côtés opposés au conduit 12, une feuillure 38 propre à l'emboîtement sur elle du cadre 23.

Lors de l'implantation de l'appareillage électrique 10 à rapporter sur la base 11, le support adaptateur 20 suivant l'invention est simplement accolé par son corps 21, et, plus précisément, par la semelle 22 de celui-ci, au conduit 12, et, en pratique, à la semelle du corps 15 de ce conduit 12, à l'endroit retenu pour cette implantation.

Pour ce faire, il est simplement procédé à une butée systématique de la semelle 22 contre le conduit 12, sans se préoccuper autrement de la largeur de celui-ci, ni procéder à un quelconque autre ajustement en position de cette semelle 22.

La semelle 22 est ensuite fixée à la base 11 à équiper, par exemple par vissage, tel que mentionné ci-dessus.

Il y est ensuite rapporté le mécanisme 14 de l'appareillage électrique 10 concerné.

Les modalités de fixation correspondantes ne relèvent pas de la présente invention.

Elles sont d'ailleurs bien connues par elles-mêmes, et elles ne seront donc pas décrites plus en détail ici.

Il suffira d'indiquer que, pour des raisons qui apparaîtront ultérieurement, la zone d'implantation du mécanisme 14 sur la semelle 22 se trouve excentrée par rapport à celle-ci, en étant décalée du côté de cette semelle 22 opposé au conduit 12, et donc du côté opposé à la languette 34 constituant les moyens d'engagement correspondants.

Pour procéder ensuite, et tel que schématisé en traits interrompus à la figure 2, au câblage du mécanisme 14, c'est-à-dire à son raccordement aux conducteurs électriques 40 prévus pour sa desserte, le couvercle 16 du conduit 12 est localement éliminé sur une longueur suffisante pour le passage de ces conducteurs électriques 40.

Par exemple, ce couvercle 16 est fractionné en deux tronçons écartés longitudinalement l'un de l'autre en conséquence.

Quoi qu'il en soit, la longueur de la solution de continuité ainsi introduite localement dans le couvercle 16 est faite de préférence inférieure à la longueur de l'aile de recouvrement 29 de l'auvent 28A.

Dès lors ,lorsque celui-ci est mis en place, son aile de recouvrement 29 mord, à chacune de ses extrémités, sur les tronçons correspondants du couvercle 16 du conduit 12, en recouvrant localement ceux-ci à leur propre extrémité.

La continuité de protection des conducteurs électriques 40 se trouve ainsi localement rétablie par cette aile de recouvrement 29.

Lors de sa mise en place, l'auvent 28A repose, par la tranche de ses bords tombés 32, sur l'un et l'autre des tronçons du couvercle 16 du conduit 12, et, par l'une ou l'autre des languettes 33 formant ses moyens d'engagement, il est crocheté sur la languette 34 formant les moyens d'engagement correspondants du corps 21 auquel il est associé.

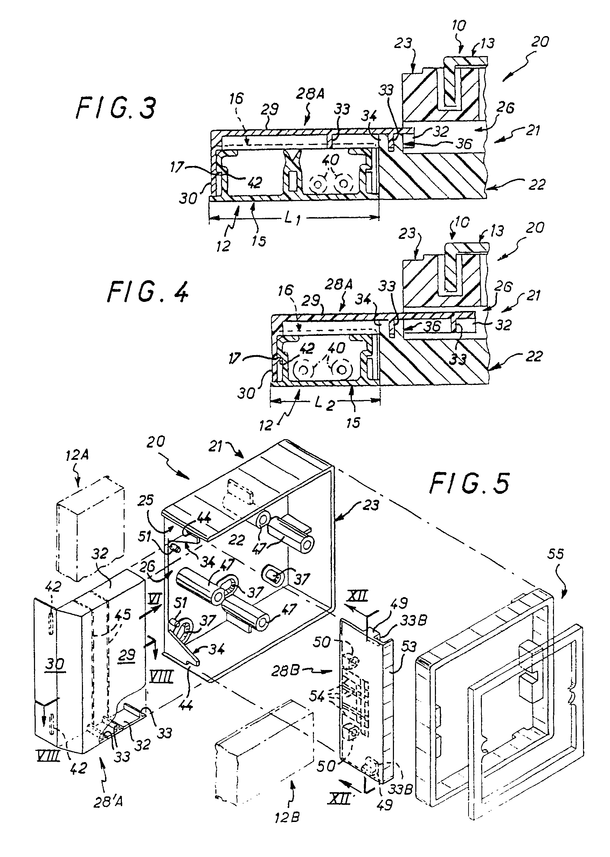

Dans la forme de mise en oeuvre illustrée par la figure 3, le conduit 12 présente une largeur L1 notable, et c'est dès lors la première des languettes 33 de l'auvent 28A, celle qui est la plus éloignée de son aile d'appui 30, qui est mise à profit.

Dans la variante de mise en oeuvre illustrée par la figure 4, c'est au contraire sa deuxième languette 33, celle la plus proche de son aile d'appui 30, qui est mise à profit, la largeur L2 du conduit 12 correspondant étant dans ce cas largement inférieure à la précédente.

Dans ce cas, l'aile de recouvrement 29 de l'auvent 28A s'engage dans le corps 21, au-dessus de la semelle 22 de celui-ci.

C'est la raison pour laquelle la zone d'implantation, sur cette semelle 22, du mécanisme 14 de l'appareillage électrique 10 concerné, est, tel que mentionné ci-dessus, décalée en direction opposée.

Dans tous les cas, les dispositions sont telles que, compte tenu des largeurs L1, L2 des conduits 12 concernés, l'aile d'appui 30 de l'auvent 28A est en appui contre l'aile latérale correspondante du corps 15 d'un tel conduit 12.

En pratique, dans la forme de réalisation représentée, sur la face interne de cette aile d'appui 30, l'auvent 28A comporte, en saillie, au moins une nervure 42, allongée parallèlement à l'aile de recouvrement 29 associée.

Dans la forme de réalisation représentée sur les figures 1 à 4, cette nervure 42 est unique, et elle s'étend alors sur la totalité de la longueur de l'aile d'appui 30 qu'elle affecte.

Par cette nervure 42, l'auvent 28A vient se crocheter sur le corps 15 du conduit 12, sous le redan 17 de l'aile latérale concernée de celui-ci.

Il suffit, ensuite, de mettre en place le cadre 23 du corps 21 du support adaptateur 20 suivant l'invention, ce cadre 23 venant alors coiffer, par l'évidement 26 de son côté ajouré 25, l'aile de recouvrement 29 de l'auvent 28A précédemment mis en place.

Il suffit, enfin, de mettre en place la touche basculante 13 de l'appareillage électrique 10 concerné.

Cette mise en place se fait, en pratique, suivant des modalités, qui, bien connues en elles-mêmes, et ne relevant pas de la présente invention, ne seront pas décrites ici.

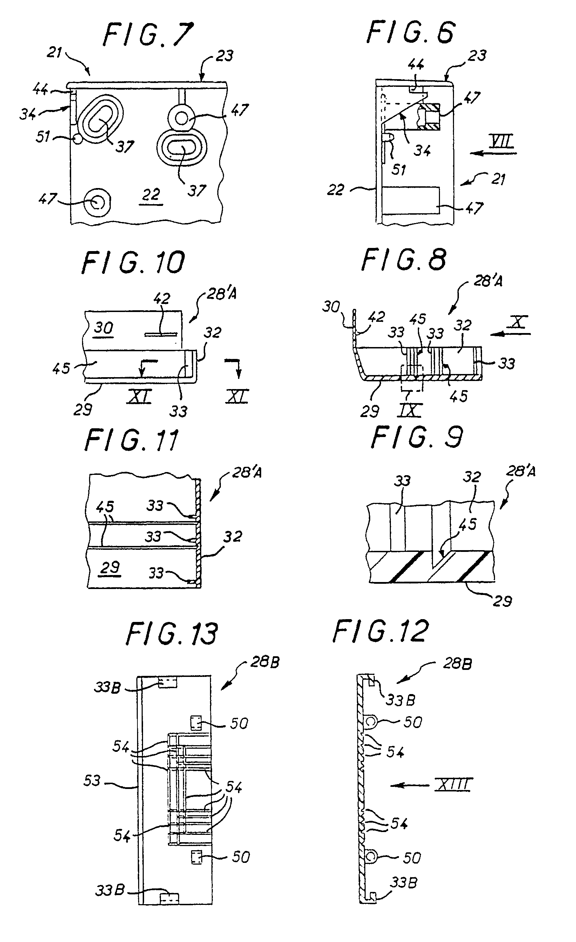

Dans la variante de réalisation illustrée par les figures 5 à 13, le cadre 23 du corps 21 du support adaptateur 20 suivant l'invention est d'un seul tenant avec la semelle 22 de celui-ci, l'évidement 26 du côté ajouré 25 de ce cadre 23 étant alors ouvert latéralement en direction opposée à ladite semelle 22.

En outre, dans cette forme de réalisation, les moyens d'engagement prévus sur le corps 21 comportent deux languettes 34, qui, en pratique, sont disposées chacune respectivement de part et d'autre de l'évidement 26 du côté ajouré 25 de son cadre 23.

Dans la forme de réalisation représentée, ces languettes 34 s'étendent à compter de la semelle 22 du corps 21, et elles ont en pratique un contour en trapèze.

Entre leur extrémité libre, au moins, et le côté du cadre 23 qui en est proche, s'étend, pour chacune d'elles, une saignée 44 propre au passage du bord tombé 32 correspondant de l'auvent 28'A associé.

Dans cette forme de réalisation, une telle saignée 44 ne s'étend que sur une partie de la hauteur des languettes 34, ces dernières se raccordant, sur le reste de leur hauteur, au côté correspondant du cadre 23.

Corollairement, dans cette variante de réalisation, chacune des languettes 33 que comporte l'auvent 28'A pour son crochetage sur une telle languette 34 du corps 21 est portée par le bord tombé 32 correspondant de cet auvent 28'A.

Comme précédemment, cette languette 33 s'étend sensiblement transversalement par rapport à l'aile de recouvrement 29 de l'auvent 28'A, et donc sensiblement parallèlement à son aile d'appui 30.

Comme précédemment, également, il est ainsi prévu une pluralité de languettes 33 pour chacun des bords tombés 32 de ce dernier.

Dans la forme de réalisation représentée, il y a, en pratique, échelonnées le long de chacun des bords tombés 32 de l'auvent 28'A, en correspondance de l'un à l'autre de ces bords tombés 32, trois languettes 33.

Toutes s'étendent sur la totalité de la hauteur de ces bords tombés 32, parallèlement les unes aux autres.

Dans la forme de réalisation représentée, l'auvent 28'A comporte, en outre, au moins une ligne de prédécoupe 45, qui, s'étendant en arceau, parallèlement à son aile d'appui 30, est propre à permettre de détacher une portion de son aile de recouvrement 29 et de ses bords tombés 32.

En pratique, dans cette forme de réalisation, deux lignes de prédécoupe 45 sont ainsi prévues, parallèlement l'une à l'autre, à distance l'une de l'autre.

Elles s'étendent chacune respectivement au voisinage des languettes 33 les plus proches de l'aile d'appui 30, au-delà de ces languettes 33 par rapport à cette aile d'appui 30.

Chacune d'elles correspond à une zone de moindre épaisseur résultant d'une saignée qui, présente sur la face interne, ou inférieure, de l'aile de recouvrement 29, s'étend en continu sur la face interne des bords tombés 32.

Dans la forme de réalisation représentée, cette saignée a, en section transversale, un profil triangulaire.

Dans la forme de réalisation représentée, l'aile d'appui 30 de l'auvent 28'A comporte, en dièdre, deux pans, l'un, qui est à niveau avec ses bords tombés 32, et qui est légèrement oblique par rapport à son aile de recouvrement 29, et l'autre qui, comme précédemment, est sensiblement perpendiculaire à cette aile de recouvrement 29.

Par ce dernier, qui, dans la forme de réalisation représentée, s'étend sur toute la longueur de l'aile de recouvrement 29, mais qui, comme précédemment, peut, en variante, s'étendre sur une longueur moindre, elle porte, comme précédemment, en saillie sur sa surface interne, au moins une nervure 42 propre à se crocheter sur le redan 17 d'une aile latérale du corps 15 d'un conduit 12.

Dans la forme de réalisation représentée, deux nervures 42 sont prévues à distance l'une de l'autre, dans l'alignement l'une de l'autre, chacune d'elles ne s'étendant que sur une fraction de la longueur de l'aile d'appui 30 qu'elles affectent.

Comme précédemment, la semelle 22 du corps 21 présente des perçages 37 propres au passage de moyens de fixation.

Dans la forme de réalisation représentée sur les figures 5 à 13, elle comporte, en outre, en saillie, des puits 47 propres à la mise en oeuvre de moyens de fixation, en pratique des vis, permettant d'y rapporter le mécanisme de l'appareillage électrique concerné (non représenté).

Dans cette forme de réalisation, et pour des raisons qui apparaîtront ci-après, il est associé, au corps 21 du support adaptateur 20 suivant l'invention, en sus de l'auvent 28′A décrit précédemment, un autre organe d'équipement 28, à savoir un flasque de fermeture 28B apte à occulter l'évidement 26 du côté ajouré 25 de son cadre 23 sur une partie au moins de la hauteur de cet évidement 26.

En pratique, dans cette forme de réalisation, ce flasque de fermeture 28B est apte à occulter l'évidement 26 sur la totalité de la hauteur de celui-ci.

Comme un auvent 28A, 28′A, un tel flasque de fermeture 28B comporte des moyens d'engagement propres à venir en prise avec des moyens d'engagement prévus à cet effet sur le corps 21.

Dans la forme de réalisation représentée sur les figures 5 à 13, les moyens d'engagement que comporte le corps 21 sont les mêmes pour l'auvent 28′A et pour le flasque de fermeture 28B.

Il s'agit des languettes 34 précédemment décrites.

Pour le flasque de fermeture 28B, les moyens d'engagement comportent deux languettes 33B, qui, allongées sensiblement parallèlement à son plan, sont disposées chacune respectivement au voisinage de ses extrémités, en étant chacune portées, en équerre, par une patte 49.

Dans la forme de réalisation représentée, le flasque de fermeture 28B est renforcé, à sa base, par au moins un ergot 50.

En pratique, deux ergots 50 sont ainsi prévus, en saillie sur sa face interne, à distance l'un de l'autre.

Chacun d'eux forme une oreille, pour engagement sur un pion 51 prévu, en correspondance, en saillie sur la semelle 22 du corps 21, sensiblement perpendiculairement à cette semelle 22.

Le long de son bord opposé à ces ergots 50, le flasque de fermeture 28B présente, en outre, en équerre, dans la forme de réalisation représentée, et dans le même sens que lesdits ergots 50, un rebord 53.

Enfin, dans la forme de réalisation représentée, le flasque de fermeture 28B comporte au moins une ligne de prédécoupe 54 propre à permettre d'en détacher un panneau.

En pratique, plusieurs de ces lignes de prédécoupe 54 sont prévues, en arceau, à sa base, concentriquement les unes autour des autres, à compter du bord de celle-ci.

Chacune d'elles a une structure du même type que celle des lignes de prédécoupe 45 affectant par ailleurs l'auvent 28′A.

Enfin, dans la forme de réalisation représentée, il est associé, au cadre 23, une rehausse 55, en une ou deux parties.

Dans la forme de réalisation représentée, cette rehausse 55, qui n'est d'ailleurs que facultative, est en deux parties.

La variante de réalisation du support adaptateur 20 suivant l'invention ainsi constituée peut avantageusement être mise en oeuvre suivant l'une ou l'autre de deux implantations différentes.

Pour l'une d'elles, et tel que schématisé en traits interrompus sur la figure 5, ce support adaptateur 20 est, comme précédemment, disposé latéralement par rapport au conduit 12A concerné.

C'est alors l'auvent 28′A qui est l'organe d'équipement 28 mis en oeuvre.

Sa mise en place se fait suivant un processus analogue à celui décrit précédemment.

Il sera simplement indiqué qu'il se crochette sur les languettes 34 du corps 21 par celles des languettes 33 de ses bords tombés 32 correspondant à la largeur du conduit 12A concerné, et que, par la ligne de prédécoupe 45 correspondante, la longueur en surplus de son aile de recouvrement 29 et de ces bords tombés 32 est au préalable éliminée.

Ainsi qu'il est aisé de le comprendre, par leur portion restante, les bords tombés 32 franchissent alors les languettes 34 du corps 21 à la faveur des saignées 44 associées à celles-ci.

Mais, tel qu'également schématisé en traits interrompus à la figure 5, le support adaptateur 20 suivant l'invention peut également, suivant cette variante de réalisation, être disposé en bout d'un conduit 12B.

L'organe d'équipement 28 qui est alors mis en oeuvre est le flasque de fermeture 28B.

Il est au préalable éliminé de ce dernier, par la ligne de prédécoupe 54 correspondante, un panneau de contour complémentaire de celui du conduit 12B concerné.

Ce panneau étant éliminé, le flasque de fermeture 28B est, par l'évidement ainsi formé, engagé sur le conduit 12B concerné, avec crochetage de ses languettes 33B sur les languettes 34 du corps 21, ses pattes 49 franchissant lesdites languettes 34 à la faveur des saignées 44 correspondantes, comme l'avaient fait précédemment les bords tombés 32 de l'auvent 28'A.

Pour l'un ou l'autre de ces deux modes d'implantation, la rehausse 55, quand elle est nécessaire, est ensuite mise en place, l'ensemble étant maintenu par mise en oeuvre de moyens de fixation, en pratique vis, venant en prise avec certains au moins des puits 47 prévus en saillie à cet effet sur la semelle 22 du corps 21.

Dans ce qui précède, il est supposé que, lorsque le support adaptateur 20 suivant l'invention est implanté latéralement par rapport au conduit 12 concerné, il est implanté dans la longueur même de ce conduit, à distance de son extrémité.

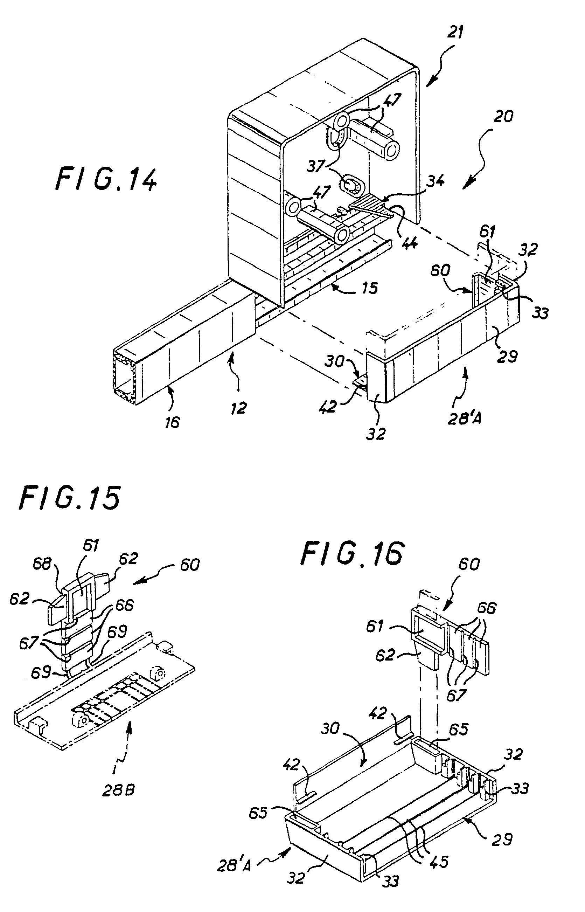

Suivant la variante de mise en oeuvre illustrée par les figures 14 à 16, il peut au contraire aussi bien être implanté en bout d'un tel conduit 12.

Dans la forme de réalisation représentée, le support adaptateur 20 est du type de celui décrit en référence aux figures 5 à 13, et, à son corps 21, il est donc associé un auvent 28'A et un flasque de fermeture 28B.

Suivant un développement de l'invention, il est associé à cet auvent 28'A un embout 60 propre à obstruer l'extrémité ouverte concernée du corps 15 du conduit 12.

En pratique, cet embout 60 comporte une partie centrale 61, globalement quadrangulaire, avec une largeur sensiblement égale à la hauteur du pan droit de l'aile d'appui 30 de l'auvent 28'A, et latéralement, le long d'un côté au moins de cette partie centrale 61, une patte 62 par laquelle il peut être rapporté sur ledit auvent 28'A, celui-ci comportant, à cet effet, de manière complémentaire, sur la face inférieure de son aile de recouvrement 29, dans l'un des angles que forme celle-ci avec son aile d'appui 30 accolée au bord tombé 32 correspondant de cette aile de recouvrement 29, une poche 65 propre à l'engagement d'une telle patte 62.

Dans la forme de réalisation représentée, il est prévu, sur l'embout 60, deux pattes 62, qui, en directions opposées l'une par rapport à l'autre, s'étendent chacune respectivement en porte-à-faux à compter de deux côtés opposés de sa partie centrale 61, pour qu'il puisse être indifféremment rapporté d'un côté ou de l'autre de l'auvent 28'A, suivant le côté de celui-ci où se termine le conduit 12.

Conjointement, l'auvent 28'A comporte en correspondance deux poches 65, disposées chacune respectivement aux extrémités de son aile d'appui 30.

Pour en faciliter l'engagement, l'un des bords latéraux au moins des pattes 62 de l'embout 60 s'étend de préférence en oblique.

Dans la forme de réalisation représentée, l'embout 60 comporte, enfin, sur le côté de sa partie centrale 61 encadré par ses pattes 62, un prolongement 66, qui, de même largeur que ledit côté, s'étend en équerre par rapport auxdites pattes 62 et présente transversalement, de place en place, à la manière de l'aile de recouvrement 29 de l'auvent 28'A, des lignes de prédécoupe 67 propres à en faciliter, à la demande, le tronçonnement.

De même, chacune des pattes 62 de l'embout 60 se raccorde à sa partie centrale par une ligne de prédécoupe 68 de même type, pour en faciliter, à la demande, l'élimination.

Autrement dit, les pattes 62 de l'embout 60 sont détachables.

Dans la forme de réalisation représentée à la figure 16, l'embout 60, par mesure de simplicité, est moulé avec le flasque de fermeture 28B ; il se rattache donc initialement à celui-ci par une ou plusieurs languettes détachables 69, qu'il suffit d'éliminer lors de son utilisation et/ou lors de celle du flasque de fermeture 28B.

En variante, il pourrait, suivant des dispositions du même type, être moulé avec l'auvent 28'A.

Lorsque, tel que représenté sur les figures 15 et 17, l'embout 60 doit être mis en oeuvre, il est d'abord procédé à l'élimination de celle de ses pattes 62 qui sera inutilisée et au tronçonnement, à la longueur désirée, à l'image de l'aile de recouvrement 29 de l'auvent 28'A, de son prolongement 66.

Il est ensuite engagé, par l'autre de ses pattes 62, dans la poche 65 concernée de cet auvent 28'A, ce qui suffit à son maintien lorsque ce dernier est ensuite lui-même mis en place suivant le processus précédemment décrit.

Si désire, il peut être prévu un flasque de fermeture sur plusieurs côtés du cadre.

Le domaine d'application de l'invention ne se limite pas à celui des seuls interrupteurs électriques, auquel il a été plus particulièrement fait référence ci-dessus, mais il s'étend au contraire aussi bien à celui de n'importe quel autre appareillage électrique, prise de courant par exemple.

## Revendications

1. Support adaptateur pour appareillage électrique, du genre comportant, d'une part, un corps (2l), qui est propre au logement du mécanisme d'un tel appareillage électrique, et qui comporte lui-même une semelle (22), et, bordant celle-ci, un cadre (23), dont l'un au moins des côtés, dit ci-après par simple commodité côté ajouré (25), est au moins en partie évidé, avec en bordure de l'évidement (26) correspondant, des moyens d'engagement (34), et, d'autre part, associé audit corps (21), un auvent (28A, 28'A) qui forme une pièce distincte dudit cadre (23), et qui est doté de moyens d'engagement (33) par lesquels il est apte à venir en prise avec les moyens d'engagement (34) précédents, ledit auvent (28A, 28'A) présentant au moins une aile (29), dite ci-après par simple commodité aile de recouvrement, par laquelle il est propre à recouvrir localement un conduit (12), tel que moulure, plinthe ou analogue, caractérisé en ce que les moyens d'engagement (33) de l'auvent (28A, 28'A) comportent une pluralité de languettes (33) qui sont échelonnées transversalement par rapport à son aile de recouvrement (29) et par chacune desquelles il est apte à se crocheter sur une languette (34), qui, solidaire du corps (21) auquel il est associé, en s'étendant sensiblement perpendiculairement à la semelle (22) de celui-ci, appartient aux moyens d'engagement (34) que comporte ce dernier, en sorte que ledit auvent (28A, 28'A) est réglable en position par rapport audit corps (21), suivant l'une ou l' autre de plusieurs positions prédéterminées.

2. Support adaptateur suivant la revendication 1, caractérisé en ce que, l'auvent (28A, 28'A) comporte, sensiblement en équerre l'une par rapport à l'autre, deux ailes, à savoir outre son aile de recouvrement (29), une aile d'appui (30) par laquelle il est apte à se plaquer contre le flanc du conduit (12) concerné opposé au corps (21).

3. Support adaptateur suivant la revendication 2, caractérisé en ce que chacune des languettes (33) de l'auvent (28A, 28'A) est sensiblement parallèle à son aile d'appui (30).

4. Support adaptateur suivant la revendication 3, caractérisé en ce que chacune des languettes (33) appartenant aux moyens d'engagement (33) de l'auvent (28A) est portée par l'aile de recouvrement (29) de celui-ci, en faisant saillie sur la surface inférieure, ou interne, de ladite aile de recouvrement (29).

5. Support adaptateur suivant la revendication 4, caractérisé en ce que la languette (34) appartenant aux moyens d'engagement (34) du corps (21) forme l'un des côtés d'un puits (36) qui fait saillie sur la semelle (22) de celui-ci.

6. Support adaptateur suivant la revendication 3, caractérisé en ce que chacune des languettes (33) appartenant aux moyens d'engagement (33) de l'auvent (28'A) est portée par un bord tombé (32) bordant l'aile de recouvrement (29) de celui-ci.

7. Support adaptateur suivant la revendication 6, caractérisé en ce que, entre l'extrémité libre, au moins, de la languette (34) appartenant aux moyens d'engagement (34) du corps (21), et le côté du cadre (23) dudit corps (21) qui en est proche, s'étend une saignée (44) propre au passage du bord tombé (32) correspondant de l'auvent (28'A).

8. Support adaptateur suivant l'une quelconque des revendications 6, 7, caractérisé en ce que les moyens d'engagement (34) du corps (21) comportent deux languettes (34) disposées chacune respectivement de part et d'autre de l'évidement (26) du côté ajouré (25) de son cadre (23).

9. Support adaptateur suivant l'une quelconque des revendications 2 à 8, caractérisé en ce que, sur la face interne de son aile d'appui (30), l'auvent (28A, 28'A) comporte en saillie au moins une nervure (42) allongée parallèlement à son aile de recouvrement (29).

10. Support adaptateur suivant l'une quelconque des revendications 1 à 9, caractérisé en ce que, transversalement par rapport à son aile de recouvrement (29), l'auvent (28'A) comporte au moins une ligne de prédécoupe (45).

11. Support adaptateur suivant la revendication 1, caractérisé en ce que le cadre (23) du corps (21) forme une pièce distincte de la semelle (22) de celui-ci, l'évidement (26) du côté ajouré (25) dudit cadre (23) étant ouvert en direction de ladite semelle (22).

12. Support adaptateur suivant la revendication 1, caractérisé en ce que le cadre (23) du corps (21) est d'un seul tenant avec la semelle (22) de celui-ci, l'évidement (26) du côté ajouré (25) dudit cadre (23) étant ouvert en direction opposée à ladite semelle (22).

13. Support adaptateur suivant la revendication 12, caractérisé en ce qu'il lui est également associé un flasque de fermeture (28B) qui est apte à occulter l'évidement (26) du côté ajouré (25) du cadre (23) du corps (21), sur une partie au moins de la hauteur dudit évidement (26), en substitution à l'auvent (28A, 28'A) et qui comporte des moyens d'engagement (33B) propres à venir en prise avec des moyens d'engagement prévus à cet effet sur le corps (21).

14. Support adaptateur suivant la revendication 13, caractérisé en ce que le flasque de fermeture (28B) qui lui est associé est apte à occulter l'évidement (26) du côté ajouré (25) du cadre (23) du corps (21) sur toute la hauteur dudit évidement (26).

15. Support adaptateur suivant la revendication 14, caractérisé en ce que le flasque de fermeture (28B) qui lui est associé comporte au moins une ligne de prédécoupe (54) propre à permettre d'en détacher un panneau.

16. Support adaptateur suivant la revendication 15, caractérisé en ce que le flasque de fermeture (28B) qui lui est associé comporte à sa base plusieurs lignes de prédécoupe (54) en arceau, concentriquement les unes autour des autres.

17. Support adaptateur suivant l'une quelconque des revendications 13 à 16, caractérisé en ce que le flasque de fermeture qui lui est associé est renforcé par au moins un ergot (50) à sa base.

18. Support adaptateur suivant la revendication 17, caractérisé en ce que ledit ergot (50) forme une oreille, pour engagement sur un pion (51) prévu, en correspondance, en sai11ie sur la semelle (22) du corps (21).

19. Support adaptateur suivant l'une quelconque des revendications 13 à 18, caractérisé en ce que les moyens d'engagement (33B) du flasque de fermeture (28) comportent deux languettes (33B), qui, allongées sensiblement parallèlement à son plan, sont disposées chacune respectivement au voisinage de ses extrémités, en étant chacune portées par une patte (49).

20. Support adaptateur suivant les revendications 7, 8 et 19, prises conjointement, caractérisé en ce que les moyens d'engagement (34) que comporte le corps (21) sont les mêmes pour l'auvent (28'A) et pour le flasque de fermeture (28B).

21. Support adaptateur suivant l'une quelconque des revendications 1 à 20, caractérisé en ce qu'une languette (34) appartenant aux moyens d'engagement (34) que comporte le corps (21) s'étend à compter de la semelle (22) de celui-ci.

22. Support adaptateur suivant la revendication 1, caractérisé en ce que, au cadre (23) du corps (21), est associée une rehausse (55).

23. Support adaptateur suivant la revendication 1, caractérisé en ce qu'il est associé à l'auvent (28'A) un embout (60) propre à obstruer l'extrémité du corps (15) du conduit (12) concerné, lorsque l'ensemble est implanté en bout de celui-ci.

24. Support adaptateur suivant la revendication 23, caractérisé en ce que ledit embout (60) comporte latéralement au moins une patte (62) par laquelle il peut être rapporté sur l'auvent (28'A), celui-ci comportant à cet effet une poche (65) propre à l'engagement d'une telle patte.

25. Support adaptateur suivant la revendication 24, caractérisé en ce que ledit embout (60) comporte latéralement, en directions opposées, deux pattes (62), ces pattes (62) sont détachables, et l'auvent (28'A) comporte, en correspondance, deux poches (65).

26. Support adaptateur suivant l'une quelconque des revendications 23 à 25, caractérisé en ce que ledit embout (60) comporte transversalement au moins une ligne de prédécoupe (67).

27. Support adaptateur suivant l'une quelconque des revendications 23 à 26, caractérisé en ce que ledit embout (60) est moulé avec un organe d'équipement constitué d'un auvent (28'A) ou d'un flasque de fermeture (28B) en se rattachant à celui-ci par au moins une languette (69) détachable.

28. Support adaptateur suivant l'une quelconque des revendications 1 à 27, caractérisé en ce qu'il est destiné à être accolé par le corps (21) au conduit (12) concerné.

## Claims

1. An adaptor support for electrical equipment, of the type comprising on the one hand a body (21) which is capable of accomodating the mechanic of such an item of electrical equipment and which itself ccmprises a base plate (22) and bordering same a rim portion (23) of which one at least of the sides, referred to hereinafter for the sake of convenience as the apertured side (25), is at least partially cut away, with at the edge of the corresponding opening (26) engagement means (34), and, on the other hand, associated with said body (21), a cover member (28A, 28'A) which forms a separate component from said rim portion (23) and which is provided with engagement means (33) by way of which it is capable of coming into engagement with the preceding engagement means (34), said cover member (28A, 28'A) having at least one limb (29), referred to hereinafter for the sake of convenience as the covering limb, by means of which it is capable of locally covering a conduit (12) such as a moulding, plinth or the like, characterized in that the engagement means (33) of the cover member (28A, 28'A) comprise a plurality of tongue portions (33) which are disposed in spaced relationship transversely with respect to its covering limb (29) and by means of each of which it is capable of latching on to a tongue portion (34) which, being fixed with respect to the body (21) with which it is associated, extending substantially perpendicularly to the base plate (22) thereof, belongs to the engagement means (34) on the, body (21), in such a way that said cover member (28A, 28'A) is adjustable in position with respect to said body (21) in accordance with one or other of a plurality of predetermined positions.

2. An adaptor support according to claim 1 caaracterised in that the cover member (28A, 28'A) comprises, substantially at a right angle relative to each other, two limbs, namely, besides its covering limb (29), a support limb (30) by means of which it is capable of bearing against the side of the conduit (12) in question, which is opposite to the body (21).

3. An adaptor support according to claim 2 characterised in that each of the tongue portions (33) of the cover member (28A, 28'A) is substantially parallel to its support limb (30).

4. An adaptor support according to claim 3 characterised in that each of the tongue portions (33) belonging to the engagement means (33) of the cover member (28A) is carried by the covering limb (29) thereof, projecting on the lower or internal surface of said covering limb (29).

5. An adaptor support according to claim 4 characterized in that the tongue portion (34) belonging to the engagement means (34) of the body (21) forms one of the sides of a well configuration (36) which projects on the base plate (22) thereof.

6. An adaptor support according to claim 3 characterized in that each of the tongue portions (33) belonging to the engagement means (33) of the cover member (28'A) is carried by a turned-over edge (33) bordering the covering limb (29) thereof.

7. An adaptor support according to claim 6 characterised in that, between the free end at least of the tongue portion (34) belonging to the engagement means (34) of the body (21), and the side of the rim portion (23) of said body (21) which is close thereto, extends a slot (44) for the passage of the corresponding turned-over edge (32) of the cover member (28'A).

8. An adaptor support according to either one of claims 6 and 7 characterised in that the engagement bans (34) of the body (21) comprise two tongue portions (34) which are each disposed on respective sides of the opening (26) in the apertured side (25) of its rim portion (23).

9. An adaptor support according to any one of claims 2 to 8 characterised in that on the internal face of its support limb (30) the cover member (28A, 28'A) comprises in projecting relationship at least one rib (42) which is elongated parallel to its covering limb (29).

10. An adaptor support according to any one of claims 1 to 9 characterised in that transversely with respect to its covering limb (29) the cover member (28'A) comprises at least one pre-cut line (45).

11. An adaptor support according to claim 1 characterized in that the rim portion (23) of the body (A) forms a separate component from the base plate (22) thereof, the opening (26) in the apertured side (25) of said rim portion (23) being open in the direction of said base plate (22).

12. An adaptor support according to claim 1 characterized in that the rim portion (23) of the body (21) is in one piece with the base plate (22) thereof, the opening (26) in the apertured side (25) of said rim portion (23) being open in the opposite direction to said base plate (22).

13. An adaptor support according to claim 12 characterized in that also associated therewith is a closure plate (28B) which is capable of closing off the opening (26) in the apertured side (25) of the rim portion (23) of the body (21) over a part at least of the height of said opening (26), as a replacement for the cover member (28A, 28'A), and which comprises engagement means (33B) for coming into engagement with engagement means provided for that porpose on the body (21).

14. An adaptor support according to claim 13 characterized in that the closure plate (28B) which is associated therewith is capable of closing off the opening (26) in the apertured side (25) of the rim portion (23) of the body (21) over the entire height of said opening (26).

15. An adaptor support according to claim 14 characterized in that the closure plate (28B) which is associated therewith comprises at least one pre-cut line (54) for permitting a panel portion to be detached therefrom.

16. An adaptor support according to claim 15 characterized in that the closure plate (28B) which is associated therewith comprises at its base a plurality of arcuate pre-cut lines (54) which are disposed concentrically around each other.

17. An adaptor support according to any one of claims 13 to 16 characterized in that the closure plate which is associated therewith is reinforced by at least one lug (50) at its base.

18. An adaptor support according to claim 17 characterized in that said lug (50) forms an ear portion for engagement on a peg (51) provided at a corresponding position and in projecting relationship on the base plate (22) of the body (21).

19. An adaptor support according to any one of claims 13 to 18 characterised in that the engagement means (33B) of the closure plate (28) comprise two tongue portions (33B) which, being elongated substantially parallel to its plane, are each disposed in the vicinity of its respective ends, each being carried by a tab (49).

20. An adaptor support according to claims 7, 8 and 19 in combination characterized in that the engagement means (34) on the body (21) are the same for the cover member (28'A) and for the closure plate (28B).

21. An adaptor support according to any one of claims 1 to 20 characterized in that a tongue portion (34) belonging to the engagement means (34) on the body (21) extends the base plate (22) thereof.

22. An adaptor support according to claim 1 characterized in that associated with the rim portion (23) of the body (21) is an extension portion (55).

23. An adaptor support according to claim 1 characterized in that associated with the cover member (28'A) is an end member (60) for closing the end of the body (15) of the conduit (12) in question when the assembly is installed at the end thereof.

24. An adaptor support according to claim 23 characterized in that said end member (60) laterally comprises at least one tab (62) by means of which it can be fitted on to the cover member (28'A), the latter for that purpose comprising a recess ( 65 ) for the engagement of such a tab.

25. An adaptor support according to claim 24 characterized in that said end member (60) laterally comprises two tabs (62) in opposite directions, said tabs (62) are detachable, and the cover member (28'A) comprises two recesses (65) at corresponding positions.

26. An adaptor support according to any one of claims 23 to 25 characterized in that said end member (60) laterally comprises at least one pre-cut line (67).

27. An adaptor support according to any one of claims 23 to 26 characterized in that said end member (60) is moulded with a fitment member formed by a cover member (28'A) or a closure plate (28B), being connected thereto by at least one detachable tongue portion (69).

28. An adaptor support according to any one of claims 1 to 27 characterized in that it is intended to be joined by the body (21) in side-by-side relationship to the conduit (12) in question.

**Ansprüche**

1. Adapterträger für elektrische Installationseinrichtungen mit einerseits einem Körper (21), der zur Aufnahme des Mechanismus einer solchen elektrischen Installationseinrichtung geeignet ist und einen Unterteil (22) und einen diesen begrenzenden Rahmen (23) aufweist, von dem wenigstens eine Seite, nachfolgend der Einfachheit halber durchbrochene Seite (25) genannt, zumindest teilweise ausgenommen ist, wobei innerhalb des Randes der entsprechenden Ausnehmung (26) Eingriffsmittel (34) vorgesehen sind, und andererseits einer dem Körper (21) zugeordneten Schutzabdek-

kung (28A, 28'A), die einen vom Rahmen (23) unterschiedlichen Teil bildet, und die mit Eingriffsmitteln (33) versehen ist, durch die sie mit den vorerwähnten Eingriffsmitteln (34) in Eingriff kommen kann, wobei die Schutzabdeckung (28A, 28'A) mindestens einen Flügel (29), nachstehend der Einfachheit halber Abdeckflügel genannt, aufweist, durch den sie örtlich eine Leitung (12), wie eine Deckleiste, Plinthe oder dergleichen, abdecken kann, dadurch gekennzeichnet, daß die Eingriffsmittel (33) der Schutzabdeckung (28A, 28'A) eine Mehrzahl von Zungen (33) aufweisen, die quer zu ihrem Abdeckflügel (29) gestaffelt sind, und mit jeder von denen sie sich an einer Zunge (34) verhaken kann, die mit dem zugehörigen Körper (21) fest verbunden ist, sich im wesentlichen senkrecht zu seinem Unterteil (22) erstreckt und den Eingriffsmitteln (34) des Körpers zugehört, so daß die Position der Schutzabdeckung (28 A, 28'A) in Bezug auf den Körper (21) in der einen oder anderen von mehreren vorherbestimmten Positionen einstellbar ist.

2. Adapterträger nach Anspruch 1, dadurch gekennzeichnet, daß die Schutzabdeckung (28A, 28'A) zwei im wesentlichen rechtwinkelig zueinander stehende Flügel aufweist, das heißt außer dem Abdeckflügel (29) einen Abstützflügel (30), mit dem sie sich gegen die vom Körper (21) abgewandte Seite der betreffenden Leitung (12) anlegen kann.

3. Adapterträger nach Anspruch 2, dadurch gekennzeichnet, daß jede der Zungen (33) der Schutzabdeckung (28A, 28'A) im wesentlichen parallel zu ihrem Abstützflügel (30) verläuft.

4. Adapterträger nach Anpruch 3, dadurch gekennzeichnet, daß jede der den Eingriffsmitteln (33) der Schutzabdeckung (28A) zugehörigen Zungen (33) von derem Abdeckflügel (29) getragen wird, wobei sie von der unteren, oder inneren, Fläche des Abdeckflügels (29) vorspringt.

5. Adapterträger nach Anspruch 4, dadurch gekennzeichnet, daß die den Eingriffsmitteln (34) des Körpers (21) zugehörige Zunge (34) eine der Seiten einer Vertiefung (36) bildet, die vom Unterteil (22) des Körpers vorspringt.

6. Adapterträger nach Anspruch 3, dadurch gekennzeichnet, daß jede der den Eingriffsmitteln (33) der Schutzabdeckung (28'A) zugehörigen Zungen (33) von einem den Abdeckflügel (29) der Schutzabdeckung umgebenden abstehenden Rand (32) getragen wird.

7. Adapterträger nach Anspruch 6, dadurch gekennzeichnet, daß sich zumindest zwischen dem freien Ende der den Eingriffsmitteln (34) des Körpers (21) zugehörigen Zunge (34) und der benachbarten Seite des Rahmens (23) des Körpers (21) ein Einschnitt (44) erstreckt, der ein Passieren des entsprechenden abstehenden Randes (32) der Schutzabdeckung (28'A) erlaubt.

8. Adapterträger nach Anspruch 6 oder 7, dadurch gekennzeichnet, daß die Eingriffsmittel (34) des Körpers (21) zwei Zungen (34) aufweisen, die jeweils auf einer Seite der Ausnehmung (26) der durchbrochenen Seite (25) des Rahmens (23) angeordnet sind.

9. Adapterträger nach einem der Ansprüche 2 bis 8, dadurch gekennzeichnet, daß die Schutzabdeckung (28A, 28'A) auf der Innenseite ihres Abstützflügels (30) mindestens eine vorspringende Rippe (42) aufweist, die sich parallel zum Abdeckflügel (29) längserstreckt.

10. Adapterträger nach einem der Ansprüche 1 bis 9, dadurch gekennzeichnet, daß die Schutzabdeckung (28'A) in Querrichtung zu ihrem Abdeckflügel (29) mindestens eine Bruchlinie (45) aufweist.

11. Adapterträger nach Anspruch 1, dadurch gekennzeichnet, daß der Rahmen (23) des Körpers (21) einen von seinem Unterteil (22) unterschiedlichen Teil bildet, wobei die Ausnehmung (26) der durchbrochenen Seite (25) des Rahmens (23) in Richtung zum Unterteil (22) offen ist.

12. Adapterträger nach Anspruch 1, dadurch gekennzeichnet, daß der Rahmen (23) des Körpers (21) einstückig mit dem Unterteil (22) ausgebildet ist, wobei die Ausnehmung (26) der durchbrochenen Seite (25) des Rahmens (23) in der vom Unterteil (22) abgewandten Richtung offen ist.

13. Adapterträger nach Anspruch 12, dadurch gekennzeichnet, daß ihm auch ein Abschlußflansch (28B) zugeordnet ist, der geeignet ist, die Ausnehmung (26) der durchbrochenen Seite (25) des Rahmens (23) des Körpers (21) anstelle der Schutzabdeckung (28A, 28'A zumindest über einen Teil der Höhe der Ausnehmung (26) zu bedecken, und der Eingriffsmittel (33B) aufweist, die geeignet sind, mit den zu diesem Zweck am Körper (21) vorgesehenen Eingriffsmitteln in Eingriff zu kommen.

14. Adapterträger nach Anspruch 13, dadurch gekennzeichnet, daß der zugeordnete Abschlußflansch (28B) geeignet ist, die Ausnehmung (26) der durchbrochenen Seite (25) des Rahmens (23) des Körpers (21) über die ganze Höhe der Ausnehmung (26) zu bedecken.

15. Adapterträger nach Anspruch 14, dadurch gekennzeichnet, daß der zugeordnete Abschlußflansch (28B) mindestens eine Bruchlinie (54) aufweist, die es erlaubt, ein Plättchen abzutrennen.

16. Adapterträger nach Anspruch 15, dadurch gekennzeichnet, daß der zugeordnete Abschlußflansch (28B) an seiner Basis mehrere konzentrisch umeinander vorgesehene bogenförmige Bruchlinien (54) aufweist.

17. Adapterträger nach einem der Ansprüche 13 bis 16, dadurch gekennzeichnet, daß der zugeordnete Abschlußflansch an seiner Basis durch mindestens einen Vorsprung (50) verstärkt ist.

18. Adapterträger nach Anspruch 17, dadurch gekennzeichnet, daß der Vorsprung (50) eine Öse zum Eingriff mit einem entsprechend auf dem Unterteil (22) des Körpers (21) vorgesehenen vorspringenden Zapfen (51) bildet.

19. Adapterträger nach einem der Ansprüche 13 bis 18, dadurch gekennzeichnet, daß die Eingriffsmittel (33B) des Abschlußflansches (28) zwei Zungen (33B) aufweisen, die im wesentlichen parallel zu seiner Ebene längserstreckt und jeweils in der Nähe seiner Enden angeordnet sind, wobei jede von einem Fuß (49) getragen wird.

20. Adapterträger nach Anspruch 7, 8 und 19 zusammengenommen, dadurch gekennzeichnet, daß die vom Körper (21) getragenen Eingriffsmittel (34) für die Schutzabdeckung (28'A) und für den Abschlußflansch (28B) die gleichen sind.

21. Adapterträger nach einem der Ansprüche 1 bis 20, dadurch gekennzeichnet, daß sich eine den Eingriffsmitteln (34) des Körpers (21) zugehörige Zunge (34) ausgehend von dessen Unterteil (22) erstreckt.

22. Adapterträger nach Anspruch 1, dadurch gekennzeichnet, daß dem Rahmen (23) des Körpers (21) ein Aufsetzrahmen (55) zugeordnet ist.

23. Adapterträger nach Anspruch 1, dadurch gekennzeichnet, daß der Schutzabdeckung (28'A) ein Ansatz (60) zugeordnet ist, der geeignet ist, das Ende des Körpers (15) der betreffenden Leitung (12) zu versperren, wenn die Einheit an ihrem Ende eingesetzt wird.

24. Adapterträger nach Anspruch 23, dadurch gekennzeichnet, daß der Ansatz (60) seitlich mindestens einen Lappen (62) aufweist, durch den er an der Schutzabdeckung (28A) gehalten werden kann, welche zu diesem Zweck eine zur Aufnahme eines solchen Lappens geeigneten Tasche (65) aufweist.

25. Adapterträger nach Anspruch 24, dadurch gekennzeichnet, daß der Ansatz (60) seitlich zwei in entgegengesetzten Richtungen liegende abnehmbare Lappen (62) aufweist und die Schutzabdeckung (28'A) dementsprechend zwei Taschen (65) aufweist.

26. Adapterträger nach einem der Ansprüche 23 bis 25, dadurch gekennzeichnet, daß der Ansatz (60) in Querrichtung mindestens eine Bruchlinie (67) aufweist.

27. Adapterträger nach einem der Ansprüche 23 bis 26, dadurch gekennzeichnet, daß der Ansatz (60) mit einem Installationselement, das durch eine Schutzabdeckung (28'A) oder durch einen Abschlußflansch (28) gebildet ist, geformt ist, wobei er mit dem Element durch zumindest eine abtrennbare Zunge (69) verbunden ist.

28. Adapterträger nach einem der Ansprüche 1 bis 27, dadurch gekennzeichnet, daß er dazu bestimmt ist, durch den Körper (21) mit der betreffenden Leitung (12) verbunden zu werden.

FIG.1

FIG.2

FIG. 3

FIG. 4

FIG. 5

## FIG. 7

## FIG. 6

## FIG. 10

## FIG. 8

## FIG. 11

## FIG. 9

## FIG. 13

## FIG. 12

EP 0 239 456 B1

**FIG.14**

**FIG.15**

**FIG.16**

18